# EUROPÄISCHE PATENTANMELDUNG

(11) **EP 2 020 778 A1**
(43) Veröffentlichungstag der Anmeldung: **04.02.2009**
(21) Anmeldenummer: 07113718.6
(22) Anmeldetag: 02.08.2007
(51) Int. Cl.: H04L 12/28, H04L 12/24, H04L 29/12

(54) **Bauteil zur Verwendung in einem elektrischen und/oder elektronischen Netzwerk, Netzwerk, Verfahren zum Konfigurieren eines Netzwerks sowie Computerprogramm-Produkt**

(71) Anmelder: Burkhalter, Daniel, Dipl.-Ing., 9555 Tobel (CH)
(72) Erfinder: Burkhalter, Daniel, Dipl.-Ing., 9555 Tobel (CH)
(74) Vertreter: Hepp, Dieter

(57) **Zusammenfassung**

Ein in der Gebäudeautomatisierung umfasst ein Datenbussystem (4), Steuermodule(2), insbesondere Schaltermodule oder Sensormodule sind, und Verbrauchermodule (3), wie Leuchten, Lüftungseinrichtungen, Kühleinrichtungen, Heizeinrichtungen, Beschattungseinrichtungen, Schliessanlagen oder Alarmanlagen,
wobei ein Verbrauchermodul (3) von jeweils einem entsprechenden Steuermodul (2) ansteuerbar ist. Diese Bauteile (2,3) umfassen weiter jeweils eine Schnittstelle zum Datenbussystem (4) und sind mittels einer Kennung (6) im Netzwerk identifizierbar. Die Bauteile (2,3) weisen jeweils mindestens eine Leseeinheit (5,18) zum Einlesen der auf einem Datenträger (6,15) enthaltenen Kennung (7) auf, wobei sie derart ausgebildet sind, dass zum Einlesen variabler Kennungen (7) externe Datenträger (6,15) von aussen an die Leseeinheit (5,18) heranführbar sind.

## Beschreibung

Die Erfindung betrifft ein Bauteil zur Verwendung in einem elektrischen und/oder elektronischen Netzwerk, ein Netzwerk, ein Verfahren zum Konfigurieren eines Netzwerks sowie ein Computerprogramm-Produkt mit den Merkmalen des Oberbegriffs der unabhängigen Patentansprüche. Derartige Netzwerke und Verfahren zum Konfigurieren von Netzwerken können zur einfachen Adressvergabe und Geräteidentifikation in vernetzten Systemen in der Gebäudeautomation eingesetzt werden. Solche Identifikationen oder Adressen sind erforderlich damit die Bauteile im Netzwerk verschaltet werden können.

Zum Verschalten von Netzwerken ist es bekannt, Geräteidentifikationen in Geräten wie z.B. Schaltern und Verbrauchern über tragbare Computer oder spezifische Konfigurations-Terminals zu programmieren. Dies bedeutet für den Benutzer, dass eine programmierte Geräteidentifikation von Aussen nicht mehr sichtbar ist.

Aus der DE 20 2006 006 632 U1 ist beispielsweise ein Netzwerk mit einer Vielzahl von Leuchten bekannt geworden. Die Leuchten weisen jeweils als eine individualisierende Kennung einen Aufkleber mit einem Barcode auf. Mittels eines tragbaren Barcode-Lesers kann eine Bedienperson die entsprechenden Kennungen auslesen, wobei das Barcode-Lesegerät während einer Installationsroutine mit einer Steuerung verknüpft ist. Zur Zuordnung der Leuchten löst die Bedienperson dabei die auf den installierten Lampen angebrachten Aufkleber ab und klebt sie auf ein Tableau in die entsprechende Position. In einem zweiten Schritt wird das Lesegerät verwendet, um der Steuerung die Position der einzelnen Leuchten mitzuteilen. Aufgrund der Verwendung tragbarer und durch Personen zu bedienende Lesegeräte haben solche Anordnungen Nachteile hinsichtlich Handhabung und Automatisierung. Eine Anpassung der Verschaltung der Leuchten ist nach der ersten Inbetriebnahme schwierig.

In der DE 10 323 689 A1 ist eine steuerbare Lichtanlage mit mehreren mit Kennungen versehenen Leuchten beschrieben, bei der ebenfalls eine Bedienperson mit einem Barcode-Leser zur Inbetriebnahme des Netzwerks nötig ist.

Die DE 10 3 61 342 A1 offenbart ein Bauteil in Form eines Schaltermoduls für die Verwendung in Kraftfahrzeugen. Das Schaltermodul verfügt über einen werkseitig angebrachten, optisch auslesbaren Strichcode sowie weiterhin über eine in einem Trägerteil angeordnete Leseeinheit zum Auslesen der Kennung. Die ausgelesenen Daten werden an ein Bussystem ausgegeben und über eine Mastereininheit werden schliesslich die entsprechenden Verbrauchermodule wie Warnblinker oder Defroster angesteuert. In der Praxis hat sich gezeigt, dass sich solche Schaltermodule nicht zur Verwendung in einem Netzwerk in der Gebäudeautomation eignen. So ist etwa eine flexible Adressvergabe bei solchen Schaltermodulen nicht möglich.

Es ist daher eine Aufgabe der vorliegenden Erfindung, die Nachteile des Bekannten zu vermeiden, insbesondere ein Bauteil zur Verwendung in einem elektrischen und/oder elektronischen Netzwerk sowie ein Netzwerk zu schaffen, das sich durch eine erhöhte Flexibilität auszeichnet. Das Bauteil soll rasche Änderung von Kennungen einfach ermöglichen. In verfahrensmässiger Hinsicht besteht die Aufgabe insbesondere darin, die Adressvergabe und Identifikation der teilnehmenden Bauteile eines Netzwerks zu vereinfachen.

Erfindungsgemäss werden diese Aufgaben mit einem Bauteil, mit einem Netzwerk und mit einem Verfahren gelöst, das die Merkmale in den unabhängigen Ansprüchen aufweist.

Das erfindungsgemässe Bauteil zur Verwendung in einem elektrischen und/oder elektronischen Netzwerk, insbesondere in einem Netzwerk in der Gebäudeautomation, ist aus der Gruppe der Steuermodule und der Verbrauchermodule ausgewählt. Steuermodule können insbesondere Schaltermodule, Reglermodule oder Sensormodule sein. Als Verbrauchermodule kommen beispielsweise Leuchten, Lüftungseinrichtungen, Kühleinrichtungen, Heizeinrichtungen, Beschattungseinrichtungen, Schliessanlagen der Gebäudetechnik in Frage. Das Bauteil umfasst mindestens eine Schnittstelle zu einem Datenbussystem und im Netzwerk identifizierbar. Das Bauteil weist mindestens eine Leseeinheit zum Einlesen einer auf einem externen Datenträger enthaltenen Kennung auf. Das Bauteil ist durch die eingelesene Kennung im Netzwerk identifiziert. Der Datenträger ist von aussen an die Leseeinheit heranführbar. Durch das Einlesen von Kennungen von solchen externen Datenträgern ist eine flexible und einfache Adressvergabe und/oder Identifikation der Bauteile im Netzwerk gewährleistet. Somit hat etwa ein Netzwerkbetreiber die freie Wahlmöglichkeit der Zuordnung eines Verbrauchermoduls zu einem entsprechenden Steuermoduls (und umgekehrt). Lesegeräte oder Rechner zum Programmieren der Module sind nicht erforderlich.

In einer ersten Ausführungsform enthält das Bauteil eine Aufnahmevorrichtung zur Aufnahme des Datenträgers in einer Aufnahmeposition. Dabei kann die Kennung auf dem Datenträger von der Leseeinheit in der Aufnahmeposition oder beim Erstellen der Aufnahmeposition einlesbar sein. Mittels einer derartigen Aufnahmevorrichtung lassen sich externe Datenträger auf einfache Art und Weise positionieren.

Vorteilhaft kann es sein, wenn am Bauteil eine Aufnahmeöffnung angeordnet ist, in die der Datenträger zum Erstellen der Aufnahmeposition einführbar ist, wodurch der Datenträger von aussen einfach an die Leseeinheit heranführbar ist.

Das Bauteil kann beispielsweise ein Gehäuse aufweisen, in dem die Leseeinheit angeordnet ist. Das Gehäuse kann z.B. quaderförmig ausgebildet sein und aus Kunststoff bestehen. Selbstverständlich sind aber auch andere Gehäuseformen und -materialen vorstellbar. Die vorgenannte Aufnahmeöffnung kann beispielsweise eine korrespondierend zum Datenträger ausgestaltete Öffnung in einer Gehäusewand des Gehäuses des Bauteils sein.

Besonders vorteilhaft kann es sein, wenn die Leseeinheit als optische Einheit, z.B. zum Einlesen eines graphischen Codes, z.B. Barcodes ausgebildet ist. Als Barcode kommen sämtliche auf einem flächigen Datenträger anbringbare Codierungen wie etwa Strichcodes oder Matrixcodes in Frage. Bevorzugt enthält die Leseeinheit eine LED als Sender und eine Photodiode als Empfänger. Derartige Leseeinheiten, insbesondere derartige Barcode-Leseeinheiten, zeichnen sich durch einen günstigen Anschaffungspreis aus, wodurch mit verhältnismässig geringem finanziellen Aufwand sämtliche Steuer- und Verbrauchermodule eines Netzwerks jeweils mit Leseeinheiten ausgerüstet werden könnten.

Die Aufnahmevorrichtung kann derart ausgebildet sein, dass in ihr ein flächiger Datenträger, insbesondere ein Papier- oder Kartonstreifen aufnehmbar ist. Der Datenträger kann selbstverständlich aber auch aus Kunststoff, aus einem Kartonlaminat oder aus einem anderen Werkstoff bestehen. Bei der Verwendung flächiger Datenträger kann die vorgenannte Aufnahmeöffnung als schlitzförmige Aussparung in der Gehäusewand ausgestaltet sein.

Zum geführten Einführen des Datenträgers in die Aufnahmevorrichtung kann sie Führungsmittel, insbesondere Führungsschienen aufweisen. Somit lässt sich auf einfache Art und Weise über eine Schiebebewegung die Aufnahmeposition des Datenträgers erreichen. Die Führungsschienen können für den Einsetzvorgang des Datenträgers Gleitflächen definieren.

Vorteilhaft kann es weiterhin sein, wenn die Aufnahmevorrichtung derart ausgebildet ist, dass in der Aufnahmeposition die eine Seite des Datenträgers von aussen sichtbar ist und die andere Seite des Datenträgers von der Leseeinheit einlesbar ist. Zur Ermöglichung der Sichtbarkeit von aussen kann das Bauteil eine entsprechende Sichtöffnung und/oder einen transparenten, zum Datenträger korrespondierenden Gehäusewandabschnitt aufweisen.

Das Bauteil kann weiter einen Speicher umfassen, in dem zumindest die mit der Leseeinheit vom Datenträger eingelesene Kennung oder eine der Kennung entsprechende Information speicherbar ist. Diese Anordnung ermöglicht beispielsweise die Programmierung eines Steuermoduls und/oder eines Verbrauchermoduls ohne Verwendung eines zentralen Computers. Es ist aber auch denkbar, die Kennung auf einem am Bauteil angeordneten, externen Datenträger kontinuierlich zu erfassen und so eine Identifikation des Bauteils zu gewährleisten. Ein Speicher wäre dann nicht nötig.

Ein weiterer Aspekt der Erfindung betrifft ein System umfassend mindestens ein Bauteil in der vorgängig beschriebenen Art und mindestens einen Datenträger mit einer einlesbaren Kennung.

Ein vorteilhaftes System kann über einen Datenträger verfügen, der flächig, insbesondere als Papier- oder Kartonstreifen ausgebildet ist, und der auf der einen Seite eine alphanumerische, der Kennung entsprechende Beschriftung aufweist und auf der anderen Seite einen mittels der Leseeinheit einlesbaren Barcode, insbesondere eine gemäss dem ASCII-Standart codierte alphanumerische Kennung aufweist.

Das erfindungsgemässe Netzwerk insbesondere zur Verwendung in der Gebäudeautomatisierung umfasst mindestens ein Datenbussystem und mindestens ein erstes Bauteil und mindestens ein zweites Bauteil, wobei die ersten und zweiten Bauteile bevorzugt Bauteile der vorgängig beschriebenen Art sind. Die ersten Bauteile können dabei Steuermodule, insbesondere Schaltermodule oder Sensormodule sein und die zweiten Bauteile können Verbrauchermodule, insbesondere Leuchten, Lüftungseinrichtungen, Kühlreinrichtungen, Heizeinrichtungen, Beschattungseinrichtungen, Schliessanlagen oder Alarmanlagen sein. Das zweite Bauteil ist dabei von jeweils einem entsprechenden ersten Bauteil ansteuerbar. Weiterhin umfassen diese Bauteile jeweils mindestens eine Schnittstelle zum Datenbussystem und sind im Netzwerk identifizierbar. Sodann weisen die Bauteile jeweils mindestens eine Leseeinheit zum Einlesen einer auf einem externen Datenträger enthaltenen Kennung auf. Ersichtlicherweise zeichnet sich dieses Netzwerk durch eine einfache und gleichzeitig flexible Adressvergabe und Geräteidentifikation sowohl hinsichtlich der Steuermodule als auch hinsichtlich der Verbrauchermodule auf.

Weiter betrifft die Erfindung auch ein Verfahren zur Konfiguration eines Netzwerks, insbesondere eines Netzwerks der vorgängig genannten Art. Das Verfahren umfasst die folgenden Schritte: Festlegung mindestens eines Verbrauchermoduls und einer Kennung; Bereitstellung eines externen Datenträgers für das mindestens eine Verbrauchermoduls, wobei der Datenträger die Kennung aufweist, mittels welcher das Verbrauchermodul im Netzwerk identifizierbar ist; Einlesen der auf dem Datenträger enthaltenen Kennung in das mindestens eine Verbrauchermodul mittels einer Leseeinheit des Verbrauchermoduls; Festlegung mindestens eines jeweils einem entsprechenden Verbrauchermodul zugeordneten Steuermoduls und einer Kennung; Bereitstellung eines externen Datenträgers für das mindestens eine Steuermodul, wobei der Datenträger eine Kennung aufweist, mittels welcher das Steuermodul im Netzwerk identifizierbar ist; Einlesen der auf dem Datenträger enthaltenen Kennung in das mindestens eine Steuermodul mittels einer Leseeinheit des Steuermoduls.

Alternativ oder zusätzlich kann ein Verfahren zur Konfiguration eines Netzwerkes die folgenden Schritte umfassen: Festlegung mindestens eines Bauteils das ausgewählt ist aus der Gruppe der Steuermodule und der Verbrauchermodule, und Drucken einer dem Bauteil entsprechenden Kennung auf einen externen, flächigen Datenträger, wobei mittels der Kennung das Bauteil im Netzwerk identifizierbar ist. Danach kann zum Einlesen der Kennung der Datenträger von aussen an die Leseeinheit des jeweiligen gewünschten Bauteils des Netzwerks herangeführt werden.

Schliesslich betrifft ein weiterer Aspekt der Erfindung ein Computerprogramm-Produkt. Das Computerprogramm-Produkt kann auf einem computer-lesbaren Medium gespeichert sein und direkt in den internen Speicher eines Computers geladen werden. Das Produkt umfasst Software-Codeabschnitte, mit denen das vorstehend beschriebene Verfahren ausgeführt wird, wenn das Produkt auf einem Computer läuft. Besonders bevorzugt ist das Computerprogramm-Produkt zum Ausdrucken von graphischen Codes wie Strichcodes oder Matrixcodes auf einen Papier- oder Kartonstreifen geeignet, welche der Kennung entsprechen.

Weiter Vorteile und Einzelmerkmale der Erfindung ergeben sich aus der nachfolgenden Beschreibung eines Ausführungsbeispiels und aus den Zeichnungen. Es zeigen:
- Figur 1:: eine schematische Darstellung eines erfindungsgemäs- sen Netzwerkes mit mehreren Bauteilen, wobei hieraus zwei Bauteile detailliert dargestellt sind,
- Figur 2:: ein Schaltermodul für das Netzwerk gemäss Figur 1 und ein Datenträger,
- Figur 3:: das Schaltermodul gemäss Figur 2 mit dem Datenträger in einer Aufnahmeposition,
- Figur 4:: einen Zuschnitt für den Datenträger,
- Figur 5:: ein Verbrauchermodul für eine Leuchte für das Netz- werk gemäss Figur 1 mit einem teilweise eingeschobe- nen Datenträger,
- Figur 6:: einen Längsschnitt durch das Verbrauchermodul gemäss Figur 5,
- Figur 7:: ein schematisches Blockschaltbild einer Schaltungsan- ordnung für ein erfindungsgemässes Bauteil.

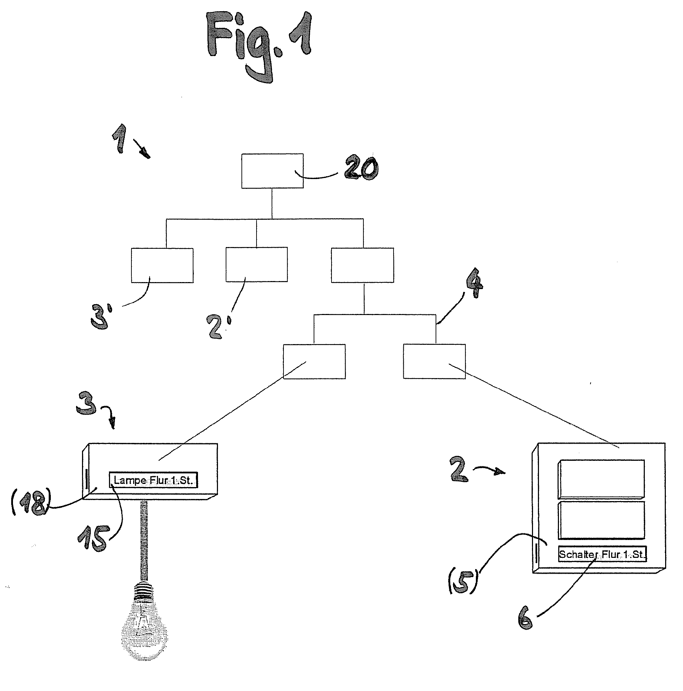

Figur 1 zeigt ein mit 1 bezeichnetes Netzwerk zur Verwendung in der Gebäudeautomation. Das Netzwerk 1 enthält eine Mehrzahl von Bauteilen, die schematisch als Rechtecke dargestellt sind. Mit 2, 2' sind Steuermodule bezeichnet, mit denen ihnen zugeordnete Verbrauchermodule 3, 3' ansteuerbar sind. Als Steuermodule kommen insbesondere Schaltermodule oder Sensormodule in Frage. Als Verbrauchermodule kommen z.B. Leuchten, Lüftungseinrichtungen, Kühleinrichtungen, Heizeinrichtungen, Beschattungseinrichtungen, Schliessanlagen oder Alarmanlagen der Gebäudetechnik in Frage. Die Module sind über ein Datenbussystem miteinander elektrisch und/oder elektronisch verbunden. Mit 20 ist eine zentrale Recheneinheit bezeichnet, die mit den Bauteilen in Verbindung steht. Es sind aber auch Netzwerke ohne eine solche zentrale Recheneinheit denkbar.

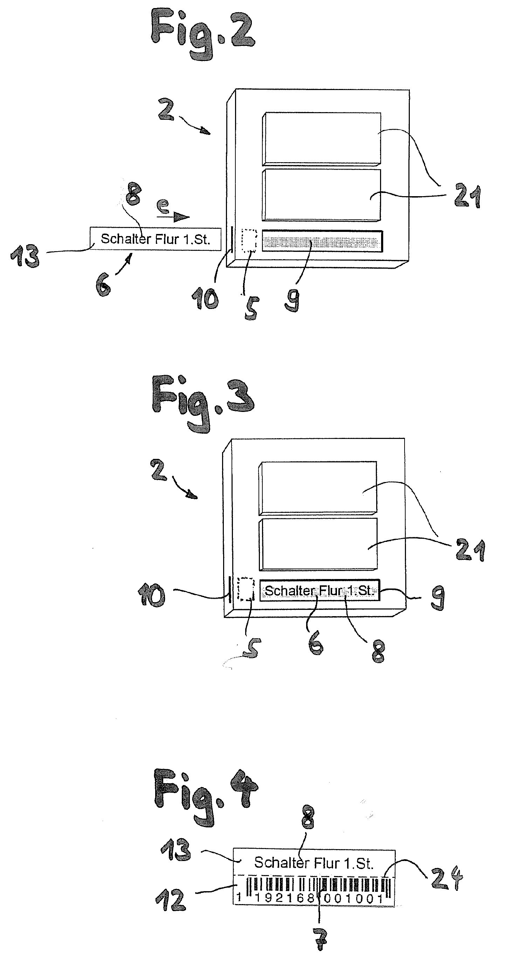

In der Darstellung gemäss Figur 1 sind beispielhaft zwei Bauteile herausgegriffen und im Detail dargestellt. Beim Bauteil 2 handelt es sich um ein Schaltermodul, mit dem ein Verbrauchermodul 3 für eine Leuchte (durch eine Glühbirne angedeutet) ansteuerbar ist. Diese Bauteile 2 und 3 verfügen jeweils über Leseeinheiten 5,18 zum Einlesen von auf einem Datenträger 6 bzw. 15 enthaltenen Kennungen. Die jeweiligen Datenträger sind im vorliegenden Ausführungsbeispiel auf ihrer von aussen sichtbaren Oberseite mit "Lampe Flur 1.St" und "Schalter Flur 1.St" alphanumerisch beschriftet. Die Kennungen auf der gegenüberliegenden Unterseite (hier nicht erkennbar; vgl. aber Fig. 4) sind automatisch auslesbar. Sie dienen zur Adressvergabe und Identifikation der jeweiligen Bauteile im Netzwerk 1. Durch die nachfolgend näher beschriebene Ausgestaltung der Bauteile 2 und 3 ist es beispielsweise möglich, das Schaltermodul 2 derart zu programmieren, dass es das gewünschte Verbrauchermodul 3 ansteuert ohne dass die Module an ein externes Gerät angeschlossen werden müssen. Bevorzugt können sämtliche Teilnehmer, d.h. alle Verbraucher- und Steuermodule des Netzwerks mit den speziellen Leseeinheiten ausgerüstet sein. Selbstverständlich ist es aber auch denkbar, einzelne Steuer- und Verbrauchermodule auf konventionelle Art und Weise auszubilden.

Wie Figur 2 zeigt, kann ein flächiger Datenträger 6 in Richtung e über eine Aufnahmeöffnung 10 in eine Aufnahmevorrichtung 9 des Schaltermoduls 2 eingeführt werden. In Figur 3 ist das Schaltermodul 2 mit dem eingesetzten Datenträger 6 in der Aufnahmeposition dargestellt. Das Schaltermodul verfügt über zwei Schaltknöpfe 21, mit denen die Lampe ein- und ausschaltbar ist. Die Aufnahmeöffnung 10 ist ersichtlicherweise als Schlitz ausgebildet, der in einer stirnseitigen Gehäusewand des Schaltermoduls 2 angeordnet ist. In der Aufnahmeposition ist die Oberseite 13 des Datenträgers 6 von aussen für einen Betrachter sichtbar, wodurch auch die Identifikation für eine Bedienperson sichergestellt ist.

In Figur 4 ist ein Zuschnitt für einen Datenträger gezeigt. Der Zuschnitt ist unterteilt in zwei Abschnitte, die jeweils der Unterseite 12 und der Oberseite 13 zugeordnet sind. Die Abschnitte sind durch eine gestrichelte Linie 24 voneinander getrennt. Die beiden Abschnitte bzw. die Ober- und Unterseiten 12 und 13 können zusammengeklappt und miteinander (z.B.) klebend verbunden werden. Die Linie 24 dient also als Klapplinie zur Herstellung des flächigen Datenträgers durch Umklappen. Selbstverständlich wäre es aber auch denkbar, einen einfachen Zuschnitt zu verwenden, bei dem die eine Seite und die gegenüberliegende Rückseite mit entsprechenden Kennungen beschriftet sind. Hier wäre ein Umklappen nicht erforderlich.

Auf dem Abschnitt für die Unterseite ist ein mittels einer Leseeinheit einlesbarer Barcode 7 angeordnet, wobei es sich um eine gemäss dem ASCII-Standard codierte alphanumerische Kennung handeln kann. Alternativ könnte statt eines solchen Strichcodes selbstverständlich auch ein Matrix-Code oder anderen Codes verwendet werden. Auf dem Abschnitt für die Oberseite 13 ist die alphanumerische Kennung "Schalter Flur 1.St" angeordnet. Die flächigen Datenträger können beispielsweise als Papier- oder Kartonstreifen ausgebildet sein. Selbstverständlich könnten die Datenträger aber auch aus Kartonlaminat, Kunststoff oder einem anderen Werkstoff bestehen.

Zum geführten Einführen des Datenträgers in die Aufnahmevorrichtung 9 sind Führungsmittel wie etwa zwei seitliche, parallel in einem Abstand verlaufende Führungsschienen (nicht gezeigt) im Schaltermodul 2 angeordnet.

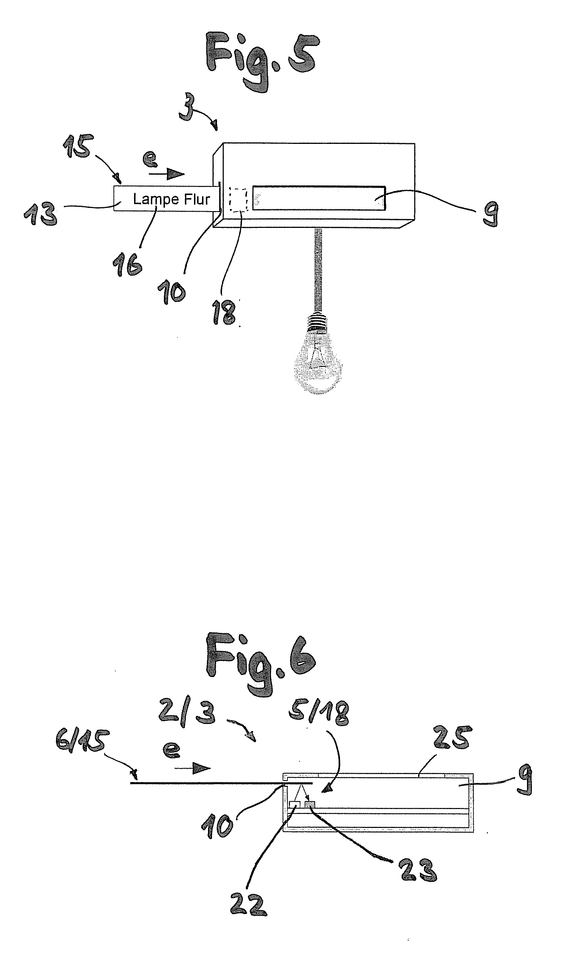

Das Verbrauchermodul 3 gemäss Figur 5 ist grundsätzlich gleichartig wie das anhand der Figuren 2 und 3 beschriebene Schaltermodul aufgebaut. Auch hier kann ein externer Datenträger 15 in das Verbrauchermodul 3 eingesetzt werden. Die entsprechende alphanumerische Kennung 16 ist wegen der teilweise eingeschobenen Position in Figur 4 nur teilweise erkennbar.

Figur 6 zeigt das Verbrauchermodul 4 in einem Längsschnitt. Das Verbrauchermodul 3 verfügt über eine Leseeinheit 18 enthaltend eine Sendediode 22 (z.b. eine LED) und eine Empfangsdiode 23 in Form einer Photodiode. Mit dieser Leseeinheit 18 kann die Kennung auf dem Datenträger 15 beim Erstellen der Aufnahmeposition eingelesen werden. Selbstverständlich eignet sich dieser prinzipielle Aufbau des Verbrauchermoduls 3 auch für ein Steuermodul 2 mit einer Leseeinheit 5 zum Einlesen des Datenträgers 6. Diese prinzipielle Austauschbarkeit ist in Figur 6 durch Schrägstriche angedeutet.

Die Leseeinheit 5 ist in einem im Längsschnitt rechteckigen Gehäuse aus Kunststoff oder Aluminium angeordnet. Mit 25 ist ein transparenter Wandabschnitt bezeichnet, durch welchen die Kennung der Obenseite von aussen einsehbar ist.

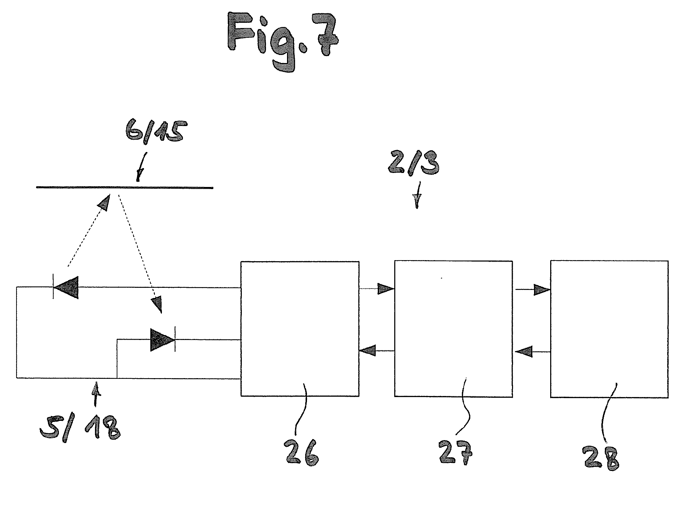

Figur 7 zeigt eine mögliche Ausgestaltung einer Schaltungsanordnung für ein Steuer- oder Verbrauchermodul 2/3. Die Leseeinheit 5/18 ist mit einer Steuerschaltung 26 verbunden. Die Steuerschaltung 26 ist ihrerseits mit einem Mikroprozessor 27 verbunden, an den ein Speicher 28 gekoppelt ist. Die Datenträger 6/15 werden vom Mikroprozessor 27 gesteuert durch die Leseeinheit 6/15 eingelesen und im nicht flüchtigen Speicher 28 gespeichert. Aus den im Speicher gespeicherten Daten wird dem Modul eine Identifikation oder Adressierung vergeben, mittels welcher das Modul im Bussystem adressierbar ist. Damit kann ein bestimmtes Schaltermodul 2 mit einem Verbrauchermodul 3 verschaltet werden. Die Verschaltung erfolgt über die entsprechende, vorgängige Zuordnung der jeweiligen Adressen der Module im zentralen Rechner. Idealerweise kann die Zuordnung im Rechner definiert werden und gleichzeitig im Rechner automatisch die Datenträger generiert werden.

Der Speicher 28 kann beispielsweise als Stack organisiert sein, wobei der zuletzt gelesene und im Fenster noch sichtbare Speicher zuoberst liegt. In der Regel wird ein solcher Eintrag die entsprechende Geräte- bzw. Bauteile-Identifikation nachstellen. Weitere Einträge können die Adressen von Kommunikationspartnern (Schalter-Lampe, Sensor-Regler-Aktor) oder Geräte-Qualifikation enthalten.

## Patentansprüche

1. Bauteil zur Verwendung in einem elektrischen und/oder elektronischen Netzwerk (1), insbesondere in einem Netzwerk in der Gebäudeautomation, das ausgewählt ist aus der Gruppe
- der Steuermodule (2,2'), insbesondere Schaltermodule oder Sensormodule, und
- der Verbrauchermodule (3,3'), insbesondere für Leuchten, Lüftungseinrichtungen, Kühleinrichtungen, Heizeinrichtungen, Beschattungseinrichtungen, Schliessanlagen oder Alarmanlagen,
das mindestens eine Schnittstelle zu einem Datenbussystem (4) umfasst und im Netzwerk identifizierbar ist, **dadurch gekennzeichnet, dass** das Bauteil mindestens eine Leseeinheit (5,18) zum Einlesen einer auf einem externen Datenträger (6) enthaltenen Kennung (7) aufweist, durch welche das Bauteil im Netzwerk identifizierbar ist, wobei der Datenträger (6,15) von aussen an die Leseeinheit (5,18) heranführbar ist.

2. Bauteil gemäss Anspruch 1, **dadurch gekennzeichnet, dass** es eine Aufnahmevorrichtung (9) zur Aufnahme des Datenträgers (6,15) in einer Aufnahmeposition enthält, wobei in der Aufnahmeposition oder beim Erstellen der Aufnahmeposition die Kennung (7,16) auf dem Datenträger (6,15) von der Leseeinheit (5,18) einlesbar ist.

3. Bauteil gemäss Anspruch 1 oder 2, **dadurch gekennzeichnet, dass** am Bauteil (2,3) eine Aufnahmeöffnung (10) angeordnet ist, in die der Datenträger (6,15) zum Erstellen der Aufnahmeposition einführbar ist.

4. Bauteil gemäss einem der Ansprüche 1 bis 3, **dadurch gekennzeichnet, dass** die Leseeinheit (5,18) eine optische Leseeinheit ist, insbesondere zum Einlesen eines Barcodes (11) ausgebildet ist.

5. Bauteil gemäss Anspruch 4, **dadurch gekennzeichnet, dass** die Leseeinheit (5) eine LED und eine Photodiode enthält.

6. Bauteil gemäss einem der Ansprüche 2 bis 5, **dadurch gekennzeichnet, dass** die Aufnahmevorrichtung (9) derart ausgebildet ist, dass in ihr ein flächiger Datenträger (6,15), insbesondere ein Papier- oder Kartonstreifen, aufnehmbar ist.

7. Bauteil gemäss einem der Ansprüche 2 bis 6, **dadurch gekennzeichnet, dass** die Aufnahmevorrichtung (9) Führungsmittel, insbesondere Führungsschienen zum geführten Einführen des Datenträger (6,15) in die Aufnahmevorrichtung (9) aufweist.

8. Bauteil gemäss einem der Ansprüche 2 bis 7, **dadurch gekennzeichnet, dass** die Aufnahmevorrichtung (9) derart ausgebildet ist, dass in der Aufnahmeposition
- die eine Seite (12) des Datenträgers von aussen sichtbar ist und
- die andere Seite (13) des Datenträgers von der Leseeinheit (5,18) einlesbar ist.

9. Bauteil gemäss einem der Ansprüche 1 bis 8, **dadurch gekennzeichnet, dass** es einen Speicher (14) umfasst, in dem zumindest die mit der Leseeinheit (5,18) vom Datenträger (6,15) eingelesene Kennung (7) oder der Kennung entsprechende Informationen speicherbar sind.

10. System umfassend
- mindestens ein Bauteil (2,3) gemäss einem der Ansprüche 1 bis 9 und
- mindestens einen Datenträger (6,15) mit einer in einem Netzwerk (1) identifizierbaren Kennung (7).

11. System gemäss Anspruch 10, **dadurch gekennzeichnet, das** der Datenträger (6,15)
- flächig, insbesondere als Papierstreifen, ausgebildet ist,
- auf der einen Seite eine alphanumerische Kennung (8,16) aufweist und
- auf der anderen Seite einen mittels der Leseeinheit (5) einlesbaren Barcode (7), insbesondere eine gemäss dem ASCII-Standard codierte alphanumerische Kennung, aufweist.

12. Netzwerk, insbesondere in der Gebäudeautomatisierung, , **gekennzeichnet durch**
- mindestens ein Datenbussystem (4) und
- mindestens ein erstes Bauteil (2) insbesondere gemäss einem der Ansprüche 1 bis 9 und mindestens ein zweites Bauteil (3); insbesondere gemäss einem der Ansprüche 1 bis 9, wobei
- die ersten Bauteile (2) Steuermodule, insbesondere Schaltermodule oder Sensormodule sind, und
- die zweiten Bauteile (3) Verbrauchermodule, insbesondere Leuchten, Lüftungseinrichtungen, Kühleinrichtungen, Heizeinrichtungen, Beschattungseinrichtungen, Schliessanlagen oder Alarmanlagen sind,
wobei das zweite Bauteil (3) von jeweils einem entsprechenden ersten Bauteil (2) ansteuerbar ist,
- wobei die Bauteile (2,3) jeweils mindestens eine Schnittstelle zum Datenbussystem (4) umfassen und mittels einer Kennung (6) im Netzwerk identifizierbar sind, und
- wobei die Bauteile (2,3) jeweils mindestens eine Leseeinheit (5,18) zum Einlesen der auf einem externen Datenträger (6,15) enthaltenen Kennung (7) aufweist.

13. Verfahren zur Konfiguration eines Netzwerkes (1) insbesondere gemäss Anspruch 12, umfassend die folgenden Schritte:
i. Festlegung mindestens eines Verbrauchermoduls (3) und einer Kennung (7),
ii. Bereitstellung wenigstens eines externen Datenträgers (6) für das mindestens eine Verbrauchermodul (3), wobei der Datenträger eine Kennung aufweist, mittels welcher das Verbrauchermodul im Netzwerk (1) identifizierbar ist,
iii. Einlesen der auf dem Datenträger (6) enthaltenen Kennung in das mindestens eine Verbrauchermodul (3) mittels einer Leseeinheit (5) des Verbrauchermoduls,
iv. Festlegung mindestens eines jeweils einem entsprechenden Verbrauchermodul (3) zugeordneten Steuermoduls (2) und einer entsprechend zweiten Kennung (16),
v. Bereitstellung eines Datenträgers (15) für das mindestens eine Steuermodul (2), wobei der Datenträger (15) die zweite Kennung (16) aufweist, mittels welcher das Steuermodul (2) im Netzwerk (1) identifizierbar ist,
vi. Einlesen der auf dem Datenträger (15) enthaltenen Kennung (16) in das mindestens eine Steuermodul (2) mittels einer Leseeinheit (18) des Steuermoduls (2).

14. Verfahren zur Konfiguration eines Netzwerkes (1) insbesondere gemäss Anspruch 12, umfassend die folgenden Schritte:
i. Festlegung mindestens eines Bauteils (2,2',3,3') das ausgewählt ist aus der Gruppe der Steuermodule (2,2'), insbesondere Schaltermodule oder Sensormodule, und der Verbrauchermodule (3,3'), insbesondere für Leuchten, Lüftungseinrichtungen, Kühleinrichtungen, Heizeinrichtungen, Beschattungseinrichtungen, Schliessanlagen oder Alarmanlagen
ii. Drucken einer vorzugsweise graphischen Kodierung für die dem Bauteil (2,2',3,3') entsprechenden Kennung (7,16) auf einen externen, flächigen Datenträger (6,15), wobei mittels der Kennung (7,16) das Bauteil (2,2',3,3') im Netzwerk (1) identifizierbar ist.

15. Verfahren gemäss Anspruch 13 oder 14, **dadurch gekennzeichnet, dass** zum Einlesen der Kennung der Datenträger (6,15) von aussen an eine Leseeinheit (5,18) des Bauteils (2,2',3,3') herangeführt wird.

16. Computerprogramm-Produkt mit Programmcode-Abschnitten, welche das Verfahren nach Anspruch 14 ausführen, wenn das Produkt auf einem Computer läuft.
